Europäisches Patentamt

European Patent Office

Office européen des brevets

(11) Veröffentlichungsnummer: **0 262 336**
A2

## (12) EUROPÄISCHE PATENTANMELDUNG

(21) Anmeldenummer: 87111140.7

(22) Anmeldetag: 01.08.87

(51) Int. Cl.4: **B23K 35/02** , B23K 11/14 , B23K 11/30

(30) Priorität: 03.10.86 CH 3971/86

(43) Veröffentlichungstag der Anmeldung:
06.04.88 Patentblatt 88/14

(84) Benannte Vertragsstaaten:
**CH DE FR GB IT LI NL SE**

(71) Anmelder: **ELPATRONIC AG**
**Baarerstrasse 117**
**CH-6300 Zug(CH)**

(72) Erfinder: **Urech, Werner**
**Rheingasse 28**
**CH-8434 Kaiserstuhl(CH)**

(74) Vertreter: **Hotz, Klaus, Dipl.-El.-Ing. / ETH**
**c/o SOUDRONIC AG Industriestrasse 35**
**Postfach 11**
**CH-8962 Bergdietikon(CH)**

(54) Elektrode für eine Ring- oder Langbuckelschweissmaschine.

(57) Beschrieben ist eine Elektrode (28) für eine Buckelschweißmaschine (10) zum Schweißen von langen Buckeln. Die Elektrode (28) ist aus mehreren nebeneinander angeordneten Teilelektroden aufgebaut. Dadurch werden über der Länge des Ring-oder Langbuckels exakt definierte Stromwege erzielt und der Einfluß veränderlicher Übergangswiderstände über der Länge des Buckels auf die Stromverteilung verringert, so daß über die den Teilelektroden zugeordneten Schweißstellen einander angenähertere Schweißströme fließen. Die Elektrode (28) eignet sich daher besonders zum Dichtschweißen von Werkstücken, bei denen sich bislang nur durch magnetisch bewegte Lichtbogen Dichtschweißungen erzielen ließen. Die Elektrode (28) erweitert also die Anwendungsmöglichkeiten des Buckelschweißens.

EP 0 262 336 A2

## Elektrode für eine Ring-oder Langbuckelschweißmaschine

Die Erfindung betrifft eine Elektrode für eine Ring-oder Langbuckelschweißmaschine.

Bei dem Buckelschweißen, das zur Verschweißung von dünnwandigen (üblicherweise 0,35 - 3,5 mm) Blechteilen dient, werden in eines der beiden Bleche örtliche Ausbeulungen, sog. Buckel, eingedrückt. In einer als Schweißpresse ausgebildeten Buckelschweißmaschine wird über großflächige Plattenelektroden die Verschweißung erzielt, wobei die Anzahl der Schweißpunkte der Anzahl der Buckel entspricht und unter Einwirkung des Druckes gleichzeitig wieder die Einebnung der Buckel erfolgt.

Die Werkstücke haben je nach der Wahl des Werkstoffes einen mehr oder weniger großen elektrischen Widerstand, weshalb sie beim Stromdurchgang erwärmt werden. Für die an der Schweißstelle umgesetzte elektrische Leistung gilt

$$P_s = I^2 \cdot R$$

wobei I der durch die Werkstücke fließende Schweißstrom und R der gesamte ohmsche Widerstand ist, der sich aus dem (im allgemeinen vernachlässigbar kleinen) Elektrodenwiderstand und aus den Stoff-und Übergangswiderständen additiv zusammensetzt, wobei es sich bei letzteren um die Übergangswiderstände "Elektrode-Werkstück" und um den Übergangswiderstand "Blech-Blech" handelt. Für die Bildung der Schweißlinse sind jedoch nur der Übergangswiderstand zwischen den Blechen und die Stoffwiderstände wirksam.

Maßgebend für die Wärmemenge, die in die Schweißstelle eingebracht wird, ist die Schweißzeit t, elektrisch ausgedrückt:

$$A = I^2 \cdot R \cdot t$$

Die Wärmezufuhr wird also durch die Schweißzeit t, durch den Strom I und den Widerstand R beeinflußt. Den maßgeblichen Einfluß hat dabei der Schweißstrom, da dieser quadratisch in die Beziehung eingeht. Eine geringe Stromänderung wird also im allgemeinen eine große Auswirkung auf den Schweißeffekt haben. Da der Strom quadratisch in die Schweißleistung eingeht, hat eine Oberflächenveränderung einen starken Einfluß, weshalb der Oberflächenbeschaffenheit starke Beachtung geschenkt werden muß, was auch für die ausgeübte Elektrodenkraft gilt, da mit zunehmender Elektrodenkraft die Übergangswiderstände kleiner werden.

Das Buckelschweißen ermöglicht, mehrere Schweißstellen gleichzeitig zu schweißen, weil aufgrund der Buckel exakt definierte Stromwege vorhanden sind. Beim Buckelschweißen können die Buckel nicht nacheinander, sondern nur gleichzeitig geschweißt werden, weil die nicht unter Elektrodenkraft stehenden Buckel einen elektrischen Nebenschluß darstellen, über den sie während des Schweißens verschmoren würden. Elektrodenkraft und Schweißstrom müssen deshalb ausreichen, um alle Buckel gleichzeitig zu schweißen. Gemäß Pfeifer, Fachkunde des Widerstandsschweißens, Verlag W. Girardet, Essen, 1969, S. 42, können maximal etwa 17-20 Buckel aufgrund der durch die Buckel exakt definierten Stromwege in einem Arbeitsgang geschweißt werden, wobei Voraussetzung allerdings eine gleichmäßige Kraft-und Stromverteilung auf jeden Buckel ist. Es ist gemäß dieser Literaturstelle zwar einfach, planparallele Spanntische der Buckelschweißmaschine vorzusehen, die auch unter der einwirkenden Elektrodenkraft noch planparallel bleiben, schwieriger zu lösen ist jedoch eine gleichmäßige Verteilung des Stromes auf alle Buckel, da sich der Sekundärstrom den Weg des kleinsten Widerstandes suchen wird und demzufolge die innen zum Transformatoranschluß hin liegenden Buckel mehr Strom führen werden als die bedienungsseitig weiter nach außen liegenden Buckel. Eine Abhilfe besteht gemäß dieser Literaturstelle darin, durch konstruktive Maßnahmen die Stromwege so zu führen, daß auch die entfernteren Buckel den gleichen Stromanteil erhalten, wobei nähere Ausführungen zu diesen konstruktiven Maßnahmen aber fehlen.

Die vorgenannte Literaturstelle befaßt sich mit dem gleichzeitigen Schweißen von mehreren Buckeln, die jeweils die Kontur von kleinen Kreisen, kleinen Quadraten oder kurzen Streifen haben, sie befaßt sich aber nicht mit dem Schweißen von sehr langen kreisringsförmigen oder geradlinigen Buckeln. Beim Schweißen von sehr langen Buckeln mit herkömmlichen Buckelschweißelektroden wäre es - schwierig, wenn nicht gar unmöglich, den Strom über die gesamte Buckellänge gleichmäßig zu verteilen, um zum Beispiel eine gewünschte Dichtschweißung zu erzielen, da im Gegensatz zum üblichen gleichzeitigen Schweißen kleiner Buckel keine definierten Stromwege vorhanden sind. Bei dem Schweißen von sehr langen Buckeln können sich überdies ungleichmäßige Widerstände über der Buckellänge durch unterschiedliche Oberflächenbeschaffenheit oder unregelmäßige Buckelform ergeben. Beispielsweise bedingt eine verschmutzte Oberfläche einen größeren Widerstand und damit einen kleineren Strom, wogegen eine saubere Oberfläche einen kleineren Widerstand und einen größeren Strom bedingt.

Betrachtet man die Stromverteilung an mehreren gleichzeitig geschweißten kleinen Buckeln beim Schweißen mit einer großflächigen Plattenelektrode über deren Länge und nimmt man an, daß den nebeneinanderliegenden Buckeln die Teilwi-

derstände $R_1$, $R_2$,... $R_n$ zugeordnet sind, dann ergeben sich diesen Buckeln zugeordnete Teilströme, die proportional zu $1/R_1$, $1/R_2$,... $1/R_n$ sind. Der Gesamtstrom verteilt sich auf die Buckel also umgekehrt proportional zu den Widerständen an den verschiedenen Buckeln.

Sind zum Beispiel $R_1$ und $R_2$ sehr voneinander verschieden, etwa wegen einer partiellen Oberflächenverschmutzung, so sind die diesen Widerständen zugeordneten Teilströme $I_1$ und $I_2$ im umgekehrten Verhältnis ebenso verschieden. Gravierende Teilwiderstandsunterschiede und damit Teilstromunterschiede über der Länge eines langen Buckels ließen sich bei Verwendung der im Stand der Technik üblichen großflächigen Plattenelektroden nicht kompensieren, so daß das Schweißergebnis über der Länge eines langen Buckels ungleichmäßig wäre. Eine möglichst gleichmäßige Stromverteilung und damit ein möglichst gleichmäßiges Schweißergebnis ist aber wie oben dargelegt erforderlich, wenn durch Ring- oder Langbuckelschweißen Dichtschweißungen hergestellt werden sollen.

Aufgabe der Erfindung ist es, eine Elektrode für eine Ring-oder Langbuckelschweißmaschine zu schaffen, mittels welcher beim Schweißen sehr langer Buckel ein möglichst gleichmäßiges Schweißergebnis über der Buckellänge erzielbar ist.

Diese Aufgabe ist erfindungsgemäß dadurch gelöst, daß die Elektrode aus mehreren nebeneinander angeordneten Teilelektroden aufgebaut ist.

Durch diese Teilelektroden werden wieder die exakt definierten Stromwege wie beim gleichzeitigen Schweißen von kleinen Buckeln erzielt.

Durch die Unterteilung der Elektrode nach der Erfindung in Teilelektroden ergeben sich zwar höhere Widerstände und damit größere Verluste, es überwiegt aber der Vorteil, der sich durch die Aufteilung des Schweißstroms in entsprechende Teilströme ergibt.

Durch die Teilelektroden wird erreicht, daß in allen ihnen jeweils zugeordneten Schweißstellen die Teilströme einander mehr angenähert sind, wenn die Teilwiderstände unterschiedlich sein sollten, weil die Teilelektroden exakte Stromwege vorgeben, die die Teilströme nehmen. Wenn unter Bezugnahme auf das obige Beispiel angenommen wird, daß die beiden ersten Teilelektroden jeweils einen Vorwiderstand $R_v$ darstellen, so ist $R_v$ zu den Widerständen $R_1$ und $R_2$ des Beispiels zu addieren, weil die großflächige Plattenelektrode in die Teilelektroden unterteilt worden ist, deren einzelne Widerstände im allgemeinen nicht mehr vernachlässigbar sind. Es gilt daher für die Stromverteilung

$$I_1 : I_2 = \frac{1}{R_v + R_1} : \frac{1}{R_v + R_2}$$

Die Nenner sind also um $R_v$ und damit wesentlich größer geworden, weshalb Widerstandsänderungen in und an den einzelnen Schweißstellen einen geringeren Einfluß auf die ensprechenden Teilströme haben werden. An den beiden Schweißstellen 1 und 2 werden daher die Schweißströme einander mehr angenähert sein werden.

Durch das erfindungsgemäße Aufteilen der Elektrode in Teilelektroden, von denen jede einen zusätzlichen Widerstand $R_v$ aufweist oder darstellt, lassen sich also auf einfache Weise auch bei Ring- oder Langbuckeln exakt definierte Stromwege und eine gleichmäßigere Stromverteilung erzielen.

In der Ausgestaltung der Erfindung nach Anspruch 2 ist jeder Teilelektrode ein ohmscher Vorderstand zugeordnet, wobei die ohmschen Vorderstände einerseits mit den zugeordneten Teilelektroden und andererseits miteinander verbunden sind. Dadurch läßt sich der vorteilhafte Effekt, den die Aufteilung der Elektrode in Teilelektroden erbringt, durch zusätz liche Vergrößerung des jeder Teilelektrode zugeordneten Gesamtwiderstands noch steigern. Gleiches gilt für die Ausgestaltung der Erfindung nach Anspruch 3, in der für jede Teilelektrode ein elektrisch schlecht leitender Werkstoff gewählt wird, so daß jede Teilelektrode selbst gleichzeitig den erhöhten Vorwiderstand darstellt.

In der Ausgestaltung der Erfindung nach Anspruch 4 wird eine Elektrode in herkömmlicher Form, aber aus elektrisch schlechter (d.h. wesentlich schlechter als beispielsweise Kupfer) leitendem Werkstoff hergestellt und durch noch wesentlich - schlechter leitende (z.B. elektrisch isolierende) Bereiche in die Teilelektroden aufgeteilt, wobei in der Ausgestaltung der Erfindung nach Anspruch 5 diese Bereiche einfach Schlitze sein können.

In der Ausgestaltung der Erfindung nach Anspruch 6 haben die Bereiche zwischen jeweils zwei Teilelektroden, also beispielsweise die Schlitze, jeweils eine sehr geringe Breite von z.B. nur 1/10 mm (die Breite ist von der Werkstückdicke abhängig). Dadurch ist die Elektrode zwar in voneinander getrennte Teilelektroden aufgeteilt, die trennenden Bereiche zwischen den Teilelektroden sind jedoch so schmal, daß vom Schweißergebnis her gesehen wie mit einer ungeteilten Elektrode geschweißt wird.

In der Ausgestaltung und Verwendung der Erfindung nach Anspruch 7 bzw. 12 lassen sich mittels einer einfach herstellbaren becherförmigen Elektrode in Draufsicht kreisringförmige lange Buckel dichtschweißen, beispielsweise in Fällen, in denen Dichtschweißen bislang nur durch magnetisch bewegte Lichtbogen gelang.

In der Ausgestaltung der Erfindung nach Anspruch 8 ist die Elektrode ein kammartig aufgebautes Teil. Wenn eine derartige Elektrode in der Buckelschweißmaschine so benutzt wird, daß sie sich nicht quer zum Transformatoranschluß, sondern in der Richtung vom Transformatoranschluß zur Bedienungsseite der Buckelschweißmaschine erstreckt, läßt sich das Problem, daß sich der Schweißstrom den bequemsten Weg sucht und demzufolge die innen zum Transformatoranschluß hin liegenden Teilelektroden mehr Strom führen als die bedienungsseitig weiter nach außen liegenden Teilelektroden, auf einfache Weise dadurch beseitigen, daß die Teilelektroden in der Ausgestaltung nach Anspruch 10 mit zunehmendem Abstand vom Transformatoranschluß bei gleicher Länge jeweils eine zunehmend größere Breite oder in der Ausgestaltung nach Anspruch 9 bei gleicher Länge und Breite zunehmend kleinere Vorwiderstände haben.

Da aufgrund der Aufteilung der Elektrode nach der Erfindung in Teilelektroden beträchtliche Verlustwärme erzeugt wird, ist eine ausreichende Kühlung der Elektrode zweckmäßig. Falls dazu eine Außenkühlung nicht ausreichen sollte, ist in der Ausgestaltung der Elektrode nach der Erfindung nach Anspruch 11 jede Teilelektrode mit einem Kühlkanal versehen, wobei sämtliche Kühlkanäle zur intensiven Kühlung der Elektrode an ein Kühlsystem angeschlossen werden, das im Betrieb ständig Kühlmittel in die Kühlkanäle einleitet und aus diesen ableitet.

Üblicherweise ist es ausreichend, in einer Buckelschweißmaschine zum Schweißen langer Buckel eine Elektrode nach der Erfindung gepaart mit einer Gegenelektrode herkömmlichen Aufbaus zu verwenden. Es kann aber auch zweckmäßig sein, als Gegenelektrode ebenfalls eine Elektrode nach der Erfindung zu verwenden.

Ausführungsbeispiele der Erfindung werden im folgenden unter Bezugnahme auf die Zeichnungen näher beschrieben. Es zeigt

Fig. 1 eine Buckelschweißmaschine mit zwei Elektroden gemäß einer ersten Ausführungsform der Erfindung,

Fig. 2 in einer perspektivischen auseinandergezogenen Darstellung ausführlicher die Elektroden nach Fig. 1,

Fig. 3 eine Längsschnittansicht der Elektroden nach Fig. 1 zusammen mit einem Werkstück, und

Fig. 4 in gleicher Darstellung wie in Fig. 1 eine Buckelschweißmaschine mit zwei geraden Elektroden gemäß einer zweiten Ausführungsform der Erfindung.

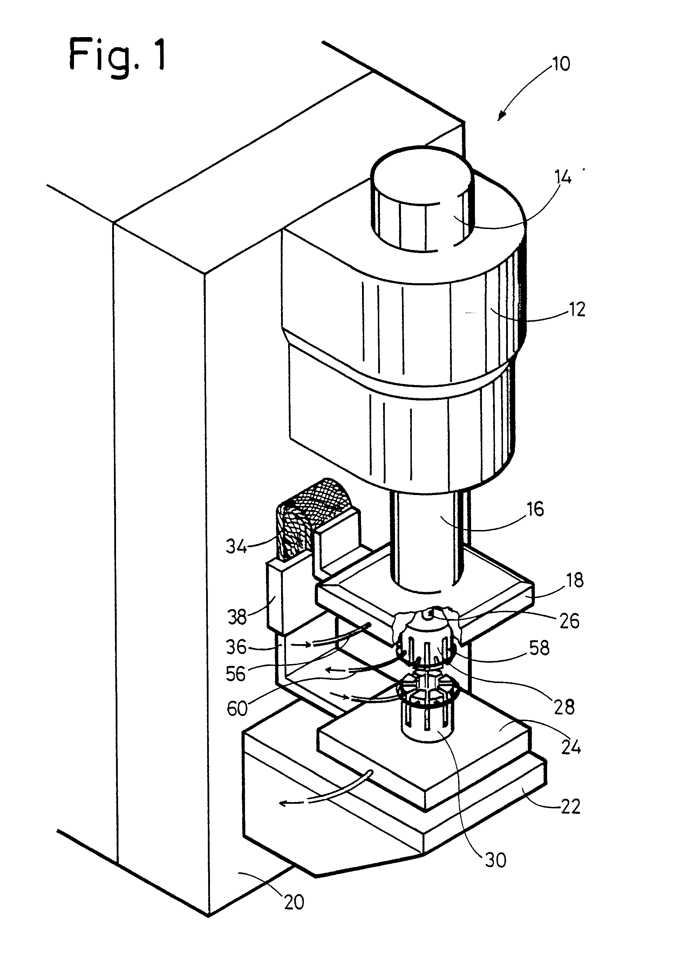

Fig. 1 zeigt eine als Schweißpresse ausgebildete und insgesamt mit 10 bezeichnete Buckelschweißmaschine. Diese weist eine Antriebseinheit 12 mit einem Zylinder 14 und einer Kolbenstange 16 auf. Am unteren Ende der Kolbenstange 16 ist eine Druckplatte 18 befestigt. Auf einem am Maschinengestell 20 befestigten Unterarm 22 ist eine Aufnahmeplatte 24 angebracht. An der Druckplatte 18 ist mittels einer Schraube 26 eine obere Elektrode 28 befestigt, wogegen eine untere Elektrode 30 auf der Aufnahmeplatte 24 mittels einer Schraube 32 befestigt ist. Die Druckplatte 18 und die Aufnahmeplatte 24 bestehen aus elektrisch gut leitendem Material und sind durch ein biegsames Stromband 34 bzw. durch eine starre Stromschiene 36 mit der Sekundärwicklung 38 des nicht dargestellten Schweißtransformators verbunden. Das Stromband 34 und die Stromschiene 36 bilden also den Transformatoranschluß der Elektroden 28, 30. Mit Ausnahme des Aufbaus der Elektroden und der Kühlung derselben ist die bis hierher beschriebene Buckelschweißmaschine herkömmlich aufgebaut.

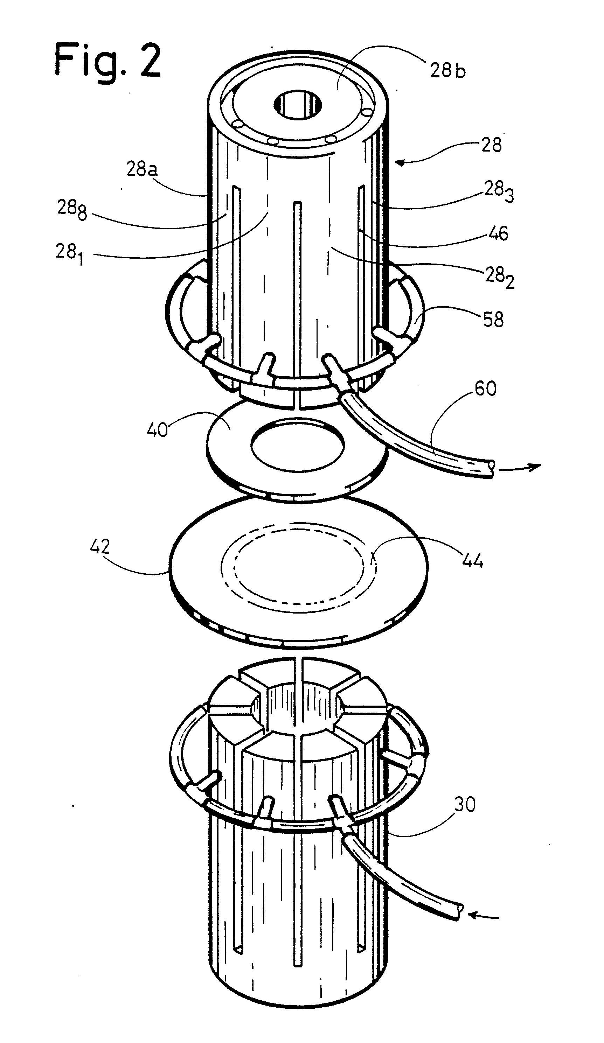

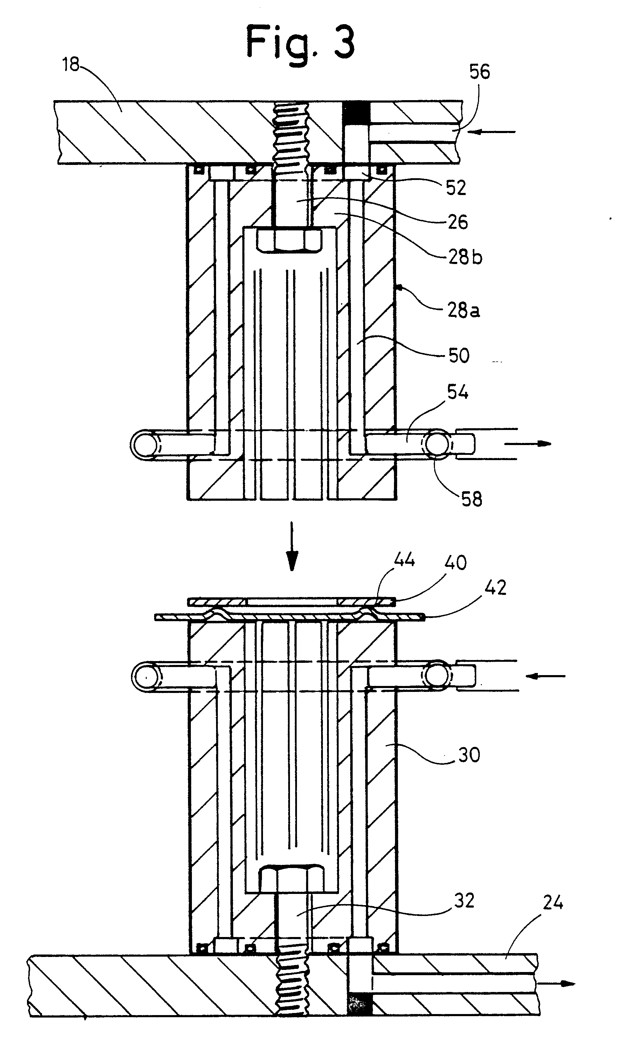

Die Fig. 2 und 3 zeigen in auseinandergezogener perspektivischer Darstellung bzw. in Längsschnittansicht den Aufbau der Elektroden 28, 30 nach Fig. 1 zusammen mit zwei Werkstückteilen 40, 42 in Form eines Ringes bzw. einer Ringscheibe, wobei die Ringscheibe 42 mit einem in Draufsicht kreisringförmigen Buckel 44 großer Umfangslänge versehen ist.

In dem Ausführungsbeispiel nach den Fig. 1 bis 3 bestehen die Elektroden 28, 30 jeweils aus einem Werkstoff, z.B. einer Kupfer-Kobalt-Beryllium-Legierung, deren elektrischer Leitwert 45 % des elektrischen Leitwerts von Kupfer beträgt. Da beide Elektroden 28, 30 den gleichen Aufbau haben, wird der Einfachheit halber lediglich der Aufbau der Elektrode 28 im einzelnen beschrieben.

Die Elektrode 28 ist ein becherförmiges Teil, dessen zylindrische Wand 28a durch Schlitze 46 in einen Kranz fingerartiger Teilelektroden $28_1$, $28_2$,... $28_n$ (hier mit n = 8) aufgeteilt ist und dessen Boden 28b die Teilelektroden an einem Ende miteinander verbindet. Auch im Bereich der Schlitze 46 erfolgt eine Dichtschweißung zwischen den Werkstückteilen 40, 42. Da die Schlitze 46 in dem Ausführungsbeispiel nach den Fig. 1-3 gleiche Umfangsabstände haben, weist jede Teilelektrode $28_1$, $28_2$,... $28_n$ den gleichen ohmschen Widerstand auf, der eingangs als $R_v$ definiert worden ist.

Die Elektrode 28 könnte auch aus einem elektrisch gut leitenden Boden 28b bestehen, an den Teilelektroden $28_1$-$28_n$ aus elektrisch schlecht leitendem Werkstoff angeschlossen sind. Weiter könnten auch die Teilelektroden aus elektrisch gut leitendem Werkstoff und der Boden 28b aus Isolierstoff bestehen, und Vorwiderstände (nicht dargestellt) könnten bei Bedarf einerseits jeweils mit einer der Teilelektroden und andererseits miteinander und mit der Druckplatte 18 bzw. dem biegsamen Stromband 34 verbunden sein. Ebenso könnten statt der hier beschriebenen Schlitze 46, die als elektrischen Isolierstoff Luft enthalten, andere Werkstoffe verwendet werden, die elektrisch wesentlich schlechter leiten als der Werkstoff der Teilelektroden, um so die Elektrode 28 in einzelne Teilelektroden zu unterteilen.

Die Elektroden könnten zwar durch Anblasen mit Luft od.dgl. gekühlt werden, zweckmäßiger ist jedoch die in den Fig. 1 bis 3 dargestellte intensive Flüssigkeitskühlung, da die Elektroden beim Stromdurchfluß stark erwärmt werden. Jede Teilelektrode $28_1$ - $28_n$ enthält daher wenigstens einen Kühlkanal 50 mit einem Kühlmitteleinlaß 52 und einem Kühlmittelauslaß 54. Die Kühlmitteleinlässe 52 bilden gemeinsam eine Ringnut, die über entsprechende Bohrungen in der Druckplatte 18 an eine Kühlmittelzufuhrleitung 56 angeschlossen sind. Die Kühlmittelauslässe 54 sind durch eine Ringleitung 58 miteinander verbunden, welche ihrerseits an eine Kühlmittelrückleitung 60 angeschlossen ist. Der übrige Teil des Kühl systems (Kühlmittelpumpe und dgl.) ist der Übersichtlichkeit halber weggelassen worden. Als Kühlmittel kann beispielsweise Wasser verwendet werden.

Zu den Anwendungsmöglichkeiten der vorstehend beschriebenen Elektroden 28, 30 zählen das Verbinden von Rotationsteilen wie Kupplungs-und Getriebeteilen, das Aufschweißen von Naben und Rohrflanschen sowie die Stumpfschweißung von Rohren. Der sich konzentrisch um die Achse erstreckende, in Draufsicht kreisringförmige Buckel großer Umfangslänge, der in den Fig. 2 und 3 schematisch als Buckel 44 dargestellt ist, läßt sich mit dem Ring 40 dichtverschweißen, und gleichzeitig können die becherförmigen Elektroden 28, 30 dabei noch axial vorstehende Werkstückteile in sich aufnehmen.

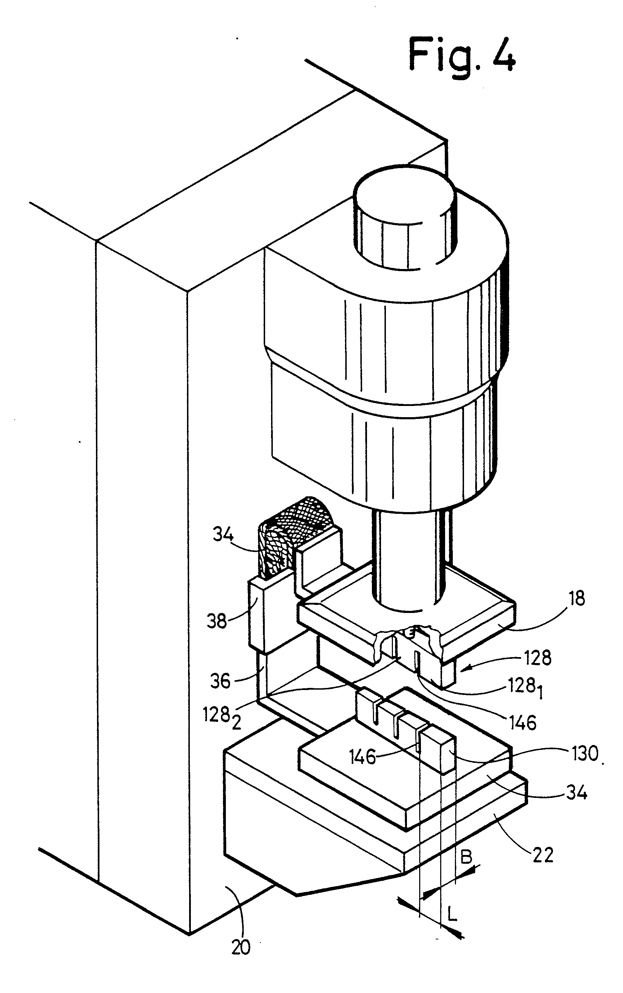

Fig. 4 zeigt eine weitere Ausführungsform, bei der die Elektroden 128, 130, die statt der becherförmigen Elektroden 28 bzw. 30 benutzt werden, jeweils als plattenförmiges Teil ausgebildet sind, das durch Schlitze 146 in eine Reihe von Teilelektroden $180_1$ - $180_n$ (hier mit n = 4) aufgeteilt ist, die an einem Ende durch einen gemeinsamen Steg wie die Zinken eines Kammes miteinander verbunden sind. Mit Ausnahme der Tatsache, daß die Elektroden 128, 130 kubisch statt zylindrisch sind, gelten die obigen Ausführungen bezüglich der Ausführungsform nach den Fig. 1 bis 3 auch für die Ausführungsform nach Fig. 4. Das gilt auch für das Kühlsystem, das in Fig. 4 der Übersichtlichkeit halber weggelassen worden ist.

Wenn die Elektroden 128, 130 im Gegensatz zu der Darstellung nach Fig. 4 jeweils um 90° gedreht benutzt werden (d.h. parallel zum Maschinengestell 20), dürfte das eingangs geschilderte Problem, daß sich der Sekundärstrom den bequemsten Weg sucht, vernachlässigbar sein, da sämtliche Teilelektroden im wesentlichen den gleichen Abstand vom Transformatoranschluß 34, 36 haben. Bei Benutzung in der in Fig. 4 dargestellten Anordnung (d.h. rechtwinkelig zum Maschinengestell 20) kann die Tatsache, daß sich der Sekundärstrom den bequemsten Weg sucht, aber zu einer ungleichmäßigen Stromverteilung führen. Es ist daher in dem dargestellten Fall zweckmäßig, den Teilelektroden $128_1$ - $128_n$ mit zunehmendem Abstand vom Transformatoranschluß 34, 36 bei jeweils gleichbleibender Länge L jeweils eine stufenweise oder stufenlos (wie dargestellt) zunehmende größere Breite B zu geben, damit unabhängig vom Abstand vom Transformatoranschluß über der Buckellänge eine gleichmäßige Stromverteilung erzielt wird.

Zur Erzielung definierter Stromwege und damit guter Schweißergebnisse ist es bereits ausreichend, die Elektroden 28, 30, 128, 130 aus elektrisch gut leitendem Werkstoff herzustellen und in die Teilelektroden zu unterteilen. Ein geeigneter Werkstoff wäre dafür CB4® -CuCo2Be (RWMA/DIN 44 759 Klasse 3) der Firma le bronze industriel deutschland (vgl. deren Prospekt BI ELECTRAL®, S. 4 und 5).

## Ansprüche

1. Elektrode für eine Ring-oder Langbuckelschweißmaschine, dadurch gekennzeichnet, daß die Elektrode (28, 128) aus mehreren nebeneinander angeordneten Teilelektroden ($28_1$ - $28_n$; $128_1$ - $128_n$) aufgebaut ist.

2. Elektrode nach Anspruch 1, dadurch gekennzeichnet, daß jede Teilelektrode ($28_1$ - $28_n$; $128_1$ - $128_n$) aus elektrisch gut leitendem Werkstoff besteht und mit einem ohmschen Vorwiderstand versehen ist.

3. Elektrode nach Anspruch 1, dadurch gekennzeichnet, daß jede Teilelektrode ($28_1$ - $28_n$; $128_1$ - $128_n$) aus elektrisch schlecht leitendem Werkstoff besteht.

4. Elektrode nach Anspruch 1, dadurch gekennzeichnet, daß sie aus elektrisch schlecht leitendem Werkstoff besteht und durch elektrisch noch wesentlich schlechter leitende Bereiche (46; 146) in die Teilelektroden ($28_1$ -$28_n$; $128_1$ -$128_n$) aufgeteilt ist.

5. Elektrode nach einem der Ansprüche 1 bis 4, dadurch gekennzeichnet, daß die Teilelektroden ($28_1$ -$28_n$; $128_1$ -$128_n$) durch Schlitze (46; 146) voneinander getrennt sind.

6. Elektrode nach Anspruch 5, dadurch gekennzeichnet daß die Schlitze (46; 146) zwischen zwei Teilelektroden ($28_1$ -$28_n$; $128_1$ -$128_n$) eine Breite von 1/10 mm haben.

7. Elektrode nach Anspruch 5 oder 6, dadurch gekennzeichnet, daß sie ein becherförmiges Teil ist, dessen zylindrische Wand (28a) durch die Schlitze (46) in einen Kranz fingerartiger Teilelektroden ($28_1$ -$28_n$) aufgeteilt ist und dessen Boden (28b) die Teilelektroden ($28_1$ -$28_n$) an einem Ende miteinander verbindet.

8. Elektrode nach Anspruch 5 oder 6, dadurch gekennzeichnet, daß sie ein plattenförmiges Teil (128) ist, das durch die Schlitze (146) in eine Reihe kammzinkenartiger Teilelektroden ($128_1$ -$128_n$) aufgeteilt ist, die an einem Ende durch einen gemeinsamen Steg miteinander verbunden sind.

9. Elektrode nach Anspruch 2, dadurch gekennzeichnet, daß die Teilelektroden ($128_1$ -$128_n$) mit zunehmendem Abstand vom Transformatoranschluß (34, 36) zunehmend kleinere Vorwiderstände haben.

10. Elektrode nach Anspruch 8, dadurch gekennzeichnet, daß die Teilelektroden ($128_1$ -$128_n$) mit zunehmendem Abstand vom Transformatoranschluß (34, 36) bei gleichbleibender Länge (L) jeweils eine zunehmend größere Breite (B), also jeweils einen größeren Querschnitt haben.

11. Elektrode nach einem der Ansprüche 1 bis 12, dadurch gekennzeichnet, daß jede Teilelektrode ($28_1$ - $28_n$) wenigstens einen Kühlkanal (50) mit einem Kühlmitteleinlaß (52) und einem Kühlmittelauslaß (54) enthält.

12. Verwendung von wenigstens einer Elektrode (28) nach Anspruch 7 zum Dichtschweißen eines in Draufsicht kreisringförmigen Buckels (44) großer Umfangslänge, insbesondere an Kupplungs- und Getriebeteilen von Kraftfahrzeugen.

# Fig. 1

# Fig. 2

# Fig. 3

Fig. 4